(19) Europäisches Patentamt
European Patent Office
Office européen des brevets

(11) **EP 2 897 775 B1**

(12) **EUROPÄISCHE PATENTSCHRIFT**

(45) Veröffentlichungstag und Bekanntmachung des Hinweises auf die Patenterteilung:
**23.01.2019 Patentblatt 2019/04**

(21) Anmeldenummer: **13762866.5**

(22) Anmeldetag: **18.09.2013**

(51) Int Cl.:
*B29B 15/10* ^(2006.01)      *B29K 101/12* ^(2006.01)

(86) Internationale Anmeldenummer:
**PCT/EP2013/069372**

(87) Internationale Veröffentlichungsnummer:
**WO 2014/044707 (27.03.2014 Gazette 2014/13)**

(54) **VERFAHREN ZUR HERSTELLUNG VON VERBUNDWERKSTOFFEN**

METHOD FOR MANUFACTURING COMPOSITE MATERIALS WITH A THERMOPLASTIC MATRIX

PROCÉDÉ DESTINÉ À LA FABRICATION DE MATIÈRES COMPOSITES À MATRICE THERMOPLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2012 EP 12185463**

(43) Veröffentlichungstag der Anmeldung:
**29.07.2015 Patentblatt 2015/31**

(73) Patentinhaber: **Covestro Deutschland AG**
**51373 Leverkusen (DE)**

(72) Erfinder:
• **GROSSER, Ulrich**
  **51515 Kürten (DE)**
• **HORN, Klaus**
  **41540 Dormagen (DE)**
• **GRIMM, Thomas**
  **50733 Köln (DE)**
• **WENZ, Eckhard**
  **50935 Köln (DE)**

(74) Vertreter: **Levpat**
**c/o Covestro AG**
**Gebäude 4825**
**51365 Leverkusen (DE)**

(56) Entgegenhaltungen:
EP-A1- 0 885 704    WO-A1-02/068356
FR-A1- 2 659 595    US-A- 4 626 306

EP 2 897 775 B1

**Beschreibung**

Gegenstand der Erfindung ist ein kontinuierliches Verfahren zur Herstellung von mit Verstärkungsfasern versehenen Thermoplasten durch Verwendung von Mikropartikeln. Die Herstellmethoden betreffen solche Verbundwerkstoffe, welche die Verstärkungsfasern geordnet in paralleler (bzw. überwiegend paralleler) Anordnung in der Thermoplastmatrix enthalten.

Es ist allgemein bekannt, dass man Polymere z. B. thermoplastische Polymere, durch Einbetten von Verstärkungsfasern in ihren mechanischen, thermischen und anderen Eigenschaften verändern kann; auch sind viele verschiedene Herstellmethoden für solche Verbunde beschrieben und werden auch praktisch angewandt. Um beispielsweise endlosfaserverstärkte Linearprofile mit einer Thermoplastmatrix herzustellen kann man endlose Verstärkungsfasern durch ein Imprägnierbad ziehen, in welchem der Thermoplast in einem Lösungsmittel gelöst ist. Nach Entfernen des restlichen Lösungsmittels aus dem Imprägniergut, verbleibt ein endlosfaserverstärktes Linearprofil mit Thermoplastmatrix, in welcher die Verstärkungsfasern parallel angeordnet sind. Auch besteht die Möglichkeit der Pulverimprägnierung, bei welcher - nach Applizieren von Thermoplastpulvern auf die Verstärkungsfasern - durch Aufschmelzen des Thermoplasten die Monofilamente des Verstärkungsfaserstranges imprägniert werden.

Grundsätzlich besteht die Möglichkeit, das endlose Verstärkungsfaserbündel direkt durch eine Thermoplastschmelze zu ziehen, um so eine Imprägnierung zu erhalten. Doch besteht hierbei die grundsätzliche Schwierigkeit, dass bei den Schmelztemperaturen, bei welchen sich der Thermoplast chemisch noch nicht verändert oder gar zersetzt, die Viskositäten des geschmolzenen Thermoplasten relativ hoch sind, so dass die Imprägniergüte und daraus resultierende Verbundeigenschaften oft nicht befriedigen.

Eine Möglichkeit zur Herstellung thermoplastischer faserverstärkter Linearprofile mittels eines Schmelzpultrusionsverfahrens wird in EP 56 703 B1 beschrieben. Kennzeichnend hierbei ist, dass in der Pultrusionstechnik der Faserstrang zuerst imprägniert und dann das Faser/Matrix-Verhältnis eingestellt wird. Letzteres geschieht beispielsweise durch Abstreifen überschüssigen Polymers an einer Kalibrierdüse.

Die JP 2008-302595 offenbart ein Herstellverfahren für Composite-Platten, bei dem eine Matte, enthaltend eine thermoplastische Faser und/oder einen pulverförmigen Thermoplasten sowie einen anorganischen Füllstoff, laminiert wird.

Die US 2009/0155522 A1 beschreibt leichtgewichtige, faserverstärkte thermoplastische Composite mit verbesserter Zähigkeit, Wärmeformbeständigkeit und Biegefähigkeit. In diesem Zusammenhang wird auch die Herstellung von Prepregs offenbart. Hierbei werden thermoplastische Pulver verwendet, die auf die Fasern des Prepregs durch Sintern aufgebracht werden. Als Beispiel werden Polypropylen Pulver mit einem durchschnittlichen Durchmesser von 250 $\mu$m genannt.

In der US 2006/0137799 A1 werden thermoplastische Composite-Materialien mit Geräusch absorbierenden Eigenschaften offenbart. Diese Materialien sind aus diversen Fasern aufgebaut, wobei für die Herstellung eines Verbundes ein Harz (Binder Resin) vor der thermischen Behandlung der Composite Platte zugegeben werden kann. Das Harz (Binder Resin) kann in Form von Pulver, Flocken, Schaum, Flüssigkeit oder Granulat zugegeben werden. Hierbei wird jedoch nicht beschrieben, welche Anforderungen an die Applikation des Harzes gestellt werden müssen, um eine reibungslose Herstellung der Composite-Materialien und guter Produktqualitäten zu gewährleisten.

Die EP 1 770 115 beschreibt ein Verfahren zur Herstellung eines faserverstärkten, thermoplastisch verarbeitbaren, flächigen Halbzeugs, wobei man ein thermoplastisches Polymer mit Verstärkungsfasern vermischt und zum Halbzeug heiß verpresst. Hierbei wird in einer Ausführungsform Polymergranulat zu Pulver vermahlen, dieses in Wasser dispergiert, die Dispersion mit Verstärkungsfasern vermischt, die Mischung getrocknet und zum Halbzeug heiß verpresst.

Gegenstand der US 2003/538357 A1 ist ein Verfahren zur Herstellung von Composite-Platten unter Verwendung eines pulverförmiges organisches Materials.

Letzteren Schriften liegt zugrunde, dass ein Thermoplast-Pulver verwendet wird.

In der DE 691 07 203 T2 wird ein Verfahren zum Imprägnieren von Fasern beschrieben, welches Partikel verwendet, die vorzugsweise < 250 $\mu$m groß sind. Bei dem beschriebenen Verfahren werden die Partikel jedoch nicht aufgeschmolzen und in die Faser verpresst, sondern die Partikel liegen in Form eines Aerosols vor, wobei das Aerosol mit einem Fließbett erzeugt wird und das Verfahren insbesondere keine Eichung erfordert sowie eine sehr regelmäßige Imprägnierung ermöglicht.

Die US 1986/4626306 beschreibt ein Verfahren, mithilfe dessen man unidirektionale Fasern mit feinen Partikeln benetzen kann, indem die Fasern durch ein mit Partikeln gefülltes Bad geführt werden. Die Partikel liegen in einer Größe von 5 bis 25 $\mu$m vor.

WO 02/068356 beschreibt eine Methode zum Beschlichten von Faserrovings mithilfe von duroplastischen Pulverpartikeln. Die durchschnittliche Partikelgröße liegt zwischen 1 und 60 $\mu$m, bevorzugt zwischen 10 und 30 $\mu$m, besonders bevorzugt zwischen 15 und 20 $\mu$m.

In EP 0 885 704 B1 wird ein Verfahren beschrieben, welches die Herstellung von Kohlenstofffaser-Prepregs beschreibt, die hauptsächlich aus Duroplastischen Harzen besteht und die Teilchen auf thermoplastischem Harz weniger als 20% des Gewichts des gesamten Prepregs ausmachen. Desweiteren wird beschrieben, dass die Größe der thermoplastischen Partikel < 150$\mu$m sein muss, da sonst die Dicke des Herzustellenden Verbundwerkstoffs größer wird als notwendig, und dadurch die physikalischen Eigenschaften geringer werden.

Für die Herstellung von Verbundwerkstoffen, oder auch Organobleche genannt, auf Basis der Prepreg-Technologie kommen heutzutage Mehrstufenprozesse bestehend aus folgenden Prozessschritten zum Einsatz:

- Granulat zu Pulver vermahlen
- Sieben der Pulver
- Herstellung der Pulver-Prepregs
- Verpressen der Pulver-Prepregs zu Organoblechen

Als Prepreg für Organobleche bezeichnet man ein mit thermoplastischem Matrixmaterial vorimprägniertes, drapierfähiges Faserhalbzeug (z.B. Gewebe, Gelege, Vlies, o.Ä.).

Die Vermahlung des Granulates zu Pulver erfolgt durch den Einsatz geeigneter Mühlen. Häufig werden hierfür z.B. Stiftmühlen oder Schwingmühlen verwendet. Je nach Mühlenart können verschiedene Zerkleinerungsmechanismen den Prozess dominieren, wobei der Kunststoff zumeist durch Reibung oder Prallbeanspruchung zerkleinert wird. Für die Herstellung von faserverstärkten Halbzeugen (Organoblechen) werden in der Regel technische Thermoplaste eingesetzt. Viele dieser technischen Thermoplaste (z.B. PA, PP, PC, PET, PEEK, PPS) weisen auch bei schlagartiger Belastung ein sehr duktiles Verhalten auf, was für den Vermahlprozess zur Folge hat, dass sich die Materialien verbiegen statt zu brechen oder aufgrund von Wärmeentwicklung sogar aufschmelzen können. Derartige Kunstoffe müssen bei der Vermahlung mit flüssigem Stickstoff oder CO2 teilweise unter -196°C runtergekühlt werden, um bei der Vermahlung spröde zu brechen. Dieser zusätzliche Schritt der Kühlung ist für den Gesamtprozess mit hohen (Energie-)Kosten verbunden und verschlechtert die Wirtschaftlichkeit massiv.

Für die Herstellung von Pulverprepregs für Organobleche gemäß Stand der Technik sind Pulver mit bestimmten Korngrößenbereichen einzusetzen. Hierfür wird in einem der Vermahlung nachgeschalteten Schritt das erzeugte Pulver durch verschiedene Siebe klassifiziert. Bevorzugte Bereiche liegen sowohl von der Prozessausbeute als auch von der Verarbeitungseignung her zwischen 200$\mu$m und 500$\mu$m.

Anschliessend wird der thermoplastische Kunststoff in Pulverform auf ein Fasergewebe, -gelege, - flies oder Ähnliches aufgetragen und durch Wärmezufuhr aufgeschmolzen. Durch die anschließende Abkühlung haftet der Kunststoff an der Faser und der Verbund ("Prepreg") kann aufgewickelt und später weiterverarbeitet werden.

Dabei wird durch eine Dosiereinrichtung bestimmt wie viel Pulver auf das Fasergewebe aufgestreut wird. Dies entscheidet letztendlich über die Verhältnis zwischen Faser und Matrix beim späteren Organoblech. Typische Anlagen für die Dosierung sind beispielsweise die Streumaschinen der Firma Schilling-Knobel GmbH. Je nach Substrat bzw. Substratform oder -größe eignen sich unterschiedliche Maschinentypen. Entscheidend ist beim Schritt der Dosierung eine gleichmäßige Verteilung der Polymermatrix auf dem Fasergewebe, um im späteren Bauteil eine homogene und durchgängige Imprägnierung des Organoblechs zu gewährleisten. Aus diesem Grund ist der Einsatz von thermoplastischem Granulat in handelsüblicher Form und Größe für Spritzguss- oder Extrusionsanwendungen (ca. 3-5 mm Durchmesser) nicht möglich, da entweder der Anteil an Polymer deutlich zu hoch wäre, oder aber bei geringerer Dosierung eine hinreichend gute Imprägnierung der Fasern nicht gegeben ist.

Polymergranulate können auf unterschiedliche, dem Fachmann bekannte Methoden, hergestellt werden. Unter anderem können wasser- oder luftgekühlte Polymerstränge extrudiert und in einem nachgeschalteten Granulator zerkleinert werden. Alternativ besteht die Möglichkeit Granulate direkt an der Düsenplatte durch Unterwassergranulierung zu erzeugen, wobei man in diesem Fall von Kopfgranulat spricht. Im Rahmen der Erfindung hat sich gezeigt, dass sich speziell Kopfgranulat in definierter Form und Größe besonders für die Herstellung von endlosfaserverstärkten thermoplastischen Linearprofilen eignet, obwohl heutzutage standardmäßig pulverförmige Thermoplaste hierfür eingesetzt werden.

Die spezifischen Materialeigenschaften von Organoblechen werden maßgeblich von dem eingesetzten Faser- und Matrixmaterial und deren Volumenanteilen bestimmt. Weiterhin ist die Anzahl und Anordnung der Faser- und Matrixlagen im Organoblech von entscheidender Bedeutung. Letztere Parameter werden nach der Pregherstellung festgelegt. Für einen Fertigungsprozess auf einer kontinuierlichen oder semikontinuierlichen Presse werden die zuvor herstellten und aufgewickelten Pulverprepregs definiert angeordnet und gleichzeitig in Heiz- bzw. Presszone mit konstantem Vorschub eingezogen. Im ersten Bereich der Presse werden die Prepreglagen unter konstantem Druck aufgeheizt. In der Regel liegen die Verarbeitungstemperaturen zwischen 200 und 300°C. Im zweiten Bereich der Presse befindet sich die Abkühlzone. Hier werden die Organobleche soweit runtergekühlt, dass das Matrixmaterial einfriert und das Fasermaterial in Form hält.

Je nach Material, Lagenanzahl und Anlagentechnik kann die Verarbeitungsgeschwindigkeit zwischen < 5m/h und >30 m/h variieren. Wichtigste Zielgröße für einen gut geführten Prozess ist die vollständige Imprägnierung der Fasern. Um dies zu erreichen müssen Produktionsgeschwindigkeit und Temperatur entsprechend eingestellt werden, wobei hier die Viskosität des Matrixmaterials den größten Einfluss hat.

Alle bis heute bekannten Herstellmethoden für Organobleche auf Basis von Prepregs haben den Nachteil, dass die Pulver große Streuungen aufweisen und der Vermahlprozess sehr aufwändig ist und muss je nach Polymer beispielsweise unter Stickstoffkühlung erfolgen, was energetisch mit hohem Aufwand verbunden ist.

Dadurch, dass das eingesetzte Pulver in einem vorangeschalteten Prozessschritt durch die Vermahlung von granulatförmigen Thermoplasten hergestellt wird, weist das gemahlene Substrat in der Regel eine sehr breite Streuung der Korngröße auf. Die Korngrößenverteilung reicht von sehr kleinen Partikeln (< $1\mu m$) bis hin zu sehr großen Partikeln (>$1000\mu m$). Substrate mit einer derart breiten Korngrößenstreuung sind für den Prozess der Prepregherstellung absolut ungeeignet. Aus diesem Grund erfolgt der Zwischenschritt des Aussiebens. Hierbei wird mit geeigneten Sieben der Fein- und Grobanteil bestmöglich vom restlichen Substrat getrennt. In der Praxis zeigt sich allerdings, dass eine vollständige Trennung - speziell vom Feinanteil - nicht möglich ist. Dieser Feinanteil hat im weiteren Prozessverlauf den großen Nachteil, dass die Verarbeitungsmaschinen stark verschmutzen und eine Reinigung sehr aufwendig ist. Darüber hinaus kann der Ausschuss (Fein- und Grobanteil) in sehr ungünstig geführten Prozessen bis zu 50% betragen. Ein weiterer Grund für die Kontamination der Anlagen ist die Geometrie der Pulverteilchen die sehr unregelmäßig ist und viele Kanten und spitze Winkel aufweist. Aus diesem Grund ist die Rieselfähigkeit derartiger Pulver relativ schlecht. Für den Prozess der Prepregherstellung ist eine gute Rieselfähigkeit jedoch von größtem Interesse, da dadurch nicht die Gefahr besteht, dass das Substrat ins Stocken gerät, wodurch eine kontinuierliche Dosierung und somit die Prepreg Herstellung unterbrochen werden könnte.

Obwohl die Apparaturen auf eine möglichst geringe Kreuzkontaminierung ausgelegt sind, kommt es daher zu Schüttgutablagerungen, die einen Wechsel von Pulvertypen deutlich erschweren, da die Geräte durch den vorherigen Pulvertyp kontaminiert sind. Die Forderung nach reduziertem Kontaminierungsrisiko beim Wechsel zu einem anderen Schüttguttyp wird jedoch zunehmend häufiger gestellt. Zudem besteht durch Feinstaub in der Luft, neben deutlichem Materialverlust, grundsätzlich das Risiko einer Staubexplosion, da im näheren Umfeld der Dosiermaschinen mit hohen Temperaturen (IR-Strahlern) gearbeitet wird.

Die Verwendung von Pulver hat also den Nachteil der aufwändigen Mahlvorgänge mit geringen Ausbeuten um zu einem Pulver mit einer durchschnittlichen Partikelgröße von 200 - 500$\mu m$ zu gelangen, deren Körner spitze Kanten haben und einen Feinanteil besitzen. Oberhalb dieser Grenze 500 $\mu m$ ist im Stand der Technik kein etabliertes Verfahren zur Herstellung von Organoblechen im Detail beschrieben. In dem Bereich unterhalb von 500$\mu m$ gibt es keine wirtschaftliche Alternative zum Pulver. Außerdem steigt mit abnehmender Korngröße der Herstellaufwand und die Ausbeute verringert sich, wodurch ein Verfahren zunehmend unwirtschaftlicher wird. Daher bestand Bedarf nach einem wirtschaftlichen Verfahren, das ebenfalls eine größere Korngröße zulässt. Weiterhin sollte dieses Verfahren ebenfalls eine gleichmäßige Verteilung des Thermoplasten ermöglichen, um eine gleichmäßige Aufschmelzrate zu erreichen.

Es war somit Aufgabe der vorliegenden Erfindung, ein Verfahren zur Verfügung zu stellen, mit Hilfe dessen der Gesamtprozess zur Herstellung von endlosfaserverstärkten Linearprofilen wirtschaftlicher und ökonomischer wird. Ferner war es Aufgabe einen auf die Verwendung der speziellen Partikeln optimierten Herstellungsprozess bereitzustellen, welcher einen schnelleren Materialwechsel mit geringerem Reinigungsaufwand ermöglicht.

Überraschenderweise wurde gefunden, dass Thermoplaste mit einer bestimmten Geometrie eine geringere Kreuzkontamination der Anlagen verursacht und daher einen vereinfachten Wechsel zwischen verschiedenen Chargen ermöglicht und somit eine gleich gute oder gar erhöhte Produktqualität bei geringerem Arbeitsaufwand ermöglicht.

Überraschenderweise wurde ebenfalls gefunden, dass Thermoplaste mit einer höheren Korngröße eingesetzt werden können, wenn die Körner diese besondere Geometrie besitzen und dies ebenfalls zu einer besseren Verteilung des Polymers auf der Oberfläche führt.

Gegenstand der Erfindung ist ein Verfahren zur Herstellung eines endlosfaserverstärkten Verbundwerkstoffprofiles oder Bandes, dadurch gekennzeichnet, dass man wenigstens einen Thermoplast in Form von nahezu sphärischen Mikropartikeln verwendet.

Die erfindungsgemäßen nahezu sphärischen Mikropartikel sind dadurch gekennzeichnet, dass mindestens 80%, bevorzugt 90%, besonders bevorzugt 95% einen Konturwinkel von > 90°, bevorzugt > 105°, besonders bevorzugt > 120° aufweisen.

Die sphärischen Mikropartikel sind außerdem dadurch gekennzeichnet, dass mindestens 80%, bevorzugt 90%, besonders bevorzugt 95% einen maximalen Durchmesser von kleiner oder gleich 2000$\mu m$, bevorzugt kleiner oder gleich 1700$\mu m$, besonders bevorzugt kleiner oder gleich 1300 $\mu m$ aufweisen. Dazu haben mindestens 80%, bevorzugt 90%, besonders bevorzugt 95% der Partikel einen maximalen Durchmesser im Bereich größer oder gleich 400$\mu m$.

Die Charakterisierung von sphärischen Mikropartikeln erfolgt folgendermaßen:

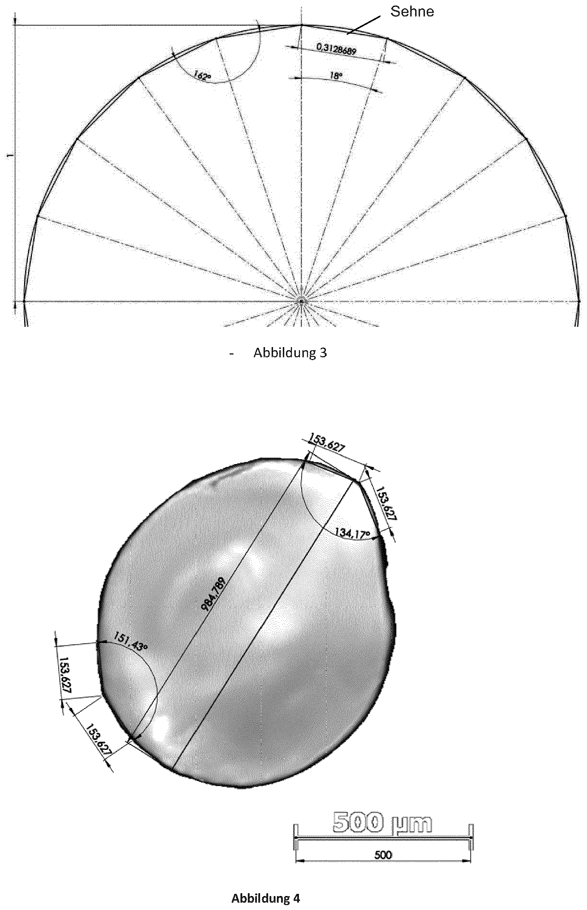

Die Geometriebestimmung erfolgt durch grafische zweidimensionale Auswertung anhand von Mikroskopieaufnahmen der Mikropartikel bzw. Pulverteilchen. Dabei entspricht die ideale Teilchengeometrie in der Draufsicht einem Kreisquerschnitt. Die maximale Abweichung von der idealen Geometrie wird dadurch ermittelt, dass Bereiche in denen die Teilchenkontur sehr unstetig verläuft, durch geeignete Sehnen approximiert und vermessen werden. (Als Sehne wird der Abschnitt einer Sekante bezeichnet, der innerhalb der Teilchenkontur ist. (Siehe Abbildung 3)). Für die dargestellten Messungen betragen die Längen der Sehnen 15,6% maximalen Teilchendurchmessers D, sodass sich bei 162° Innenwinkel zweier angrenzender Sehnen per Definition eine nahezu kreisförmige Teilchenkontur in diesem Bereich ergibt. Je weiter der Winkel unterhalb dieses Maßes liegt, desto weiter ist die Teilchenkontur von der idealen Kreisform entfernt. Die Wahl der geeigneten Sehnenlänge erfolgt über den Einheitskreis mit Radius r = 1

Der Kreis wird in 20 gleichgroße Segmente eingeteilt, sodass jedes Element einem 18° großen Kreisabschnitt entspricht (Siehe Abbildung 3)

Über die trigonometrischen Beziehungen ergibt sich somit folgender Zusammenhang zwischen Radius r und Sehnenlänge s

$$s = r \cdot \frac{\sin(\alpha)}{\cos\left(\frac{\alpha}{2}\right)} \quad mit \ \alpha = 18° \ und \ r = \frac{D}{2} \ ergibt \ sich: \quad s = D \cdot 0{,}156$$

wobei D dem maximalen Teilchendurchmesser bzw. der maximalen Teilchenausdehnung entspricht.

Die Herstellung von sphärischen Mikropartikeln erfolgt bevorzugt durch Unterwassergranulierung. Dabei wird zunächst durch eine Compoundiereinheit, z.B. einen zweiwelligen Schneckenkneter (ZSK), das thermoplastische Material bei Schmelzetemperatur vermengt. Je nach gewünschtem Materialdurchsatz können die Ausführungen des ZSK unterschiedlich groß sein. Am Austritt der Compoundiereinheit befindet sich eine Düsenplatte, durch die der schmelzeförmige Thermoplast gepresst wird. Im dahinterliegenden Wasserbad erstarrt dieser schlagartig und wird durch rotierende Messer konfektioniert. Geeignete Düsenplatten werden von der Fa. Gala (Xanten/Deutschland) bereitgestellt. Entscheidend für die Größe der sphärischen Mikropartikel und die davon abhängige Eignung für die spätere Herstellung von Organoblechen, ist vor allem die Wahl der Düsenplatte. Es hat sich als vorteilhaft herausgestellt, Düsenplatten mit Bohrungsdurchmessern kleiner oder gleich 1500 $\mu$m, bevorzugt kleiner oder gleich 1000 $\mu$m, besonders bevorzugt kleiner oder gleich 600 $\mu$m zu verwenden. Neben der Wahl der Düsenplatte ist auch die geeignete Schnittfrequenz der rotierenden Messer für Herstellung der erfindungsgemäßen sphärischen Mikropartikel von zentraler Bedeutung. Die Wahl der geeigneten Schnittfrequenz bzw. Drehzahl der rotierenden Messer ist vor allem abhängig von der Anzahl der Messerklingen, der Größe der Düsenplatte, der Anzahl der Bohrungen in der Düsenplatte, der Wassertemperatur, der Verarbeitungstemperatur des Polymers, der Durchsatzmenge und vom eingesetzten Polymer. Für die Herstellung eines PC ABS-Blends wurde beispielsweise eine Düsenplatte mit 32 Bohrungen zu je 0,5mm bei einer Verarbeitungstemperatur von 280°C und einem Materialdurchsatz von 18kg/h verwendet. Bei einer Wassertemperatur von 90°C und einem rotierenden Messer mit 7 Klingen wurden dann bei einer Drehzahl von 4000 U/min erfindungsgemäße sphärische Mikropartikel hergestellt.

Die Herstellung von Mikropartikel-Prepregs erfolgt analog dem Verfahren von Pulver-Prepregs, mit dem Unterschied, dass bei dem Einsatz von sphärischen Mikropartikeln auch übliche Dosiereinrichtungen für entsprechend größere Korngrößenbereiche verwendet werden können. Über diese Dosiereinrichtungen wird, abhängig vom eingesetzten Faserhalbzeug und den gewünschten Eigenschaften des späteren Halbzeugs, der Faservolumengehalt über die Zudosierung der sphärischen Mikropartikel eingestellt. Übliche Faservolumengehalte liegen im Bereich zwischen 30 und 70 Vol.%, bevorzugt zwischen 40 und 60 Vol.%, besonders bevorzugt zwischen 45 und 55 Vol.%. Die Zudosierung erfolgt bei Raumtemperatur und ist ein kontinuierlicher Prozess. Sobald die sphärischen Mikropartikel dem Faserhalbzeug zudosiert wurden und "lose" auf der Oberseite des Faserhalbzeugs liegen, wird die Heizzone der Prepreganlage durchlaufen. Hierbei sollten die Heizstrahler so eingestellt sein, dass sich das Matrixmaterial bis auf die empfohlenen Spritzgussverarbeitungstemperaturen aufheizt, sodass es aufschmilzt und am Faserhalbzeug anhaftet. Nachfolgend sind beispielhaft Temperaturbereiche für verschiedene PC-basierte Thermoplaste genannt.

Für reines PC liegen diese Temperaturen im Bereich zwischen 270 und 320°C, bevorzugt zwischen 280 und 310°C, besonders bevorzugt zwischen 290 und 300°C.

Für PC-ABS Blends liegen diese Temperaturen im Bereich zwischen 240 und 300°C, bevorzugt zwischen 250 und 290°C, besonders bevorzugt zwischen 260 und 270°C.

Für PC-PET Blends liegen diese Temperaturen im Bereich zwischen 250 und 300°C, bevorzugt zwischen 260 und 290°C, besonders bevorzugt zwischen 270 und 280°C.

Für PC-PBT Blends liegen diese Temperaturen im Bereich zwischen 240 und 300°C, bevorzugt zwischen 250 und 290°C, besonders bevorzugt zwischen 260 und 270°C.

Für den Qualitätserhalt des thermoplastischen Werkstoffs ist es vorteilhaft die Einwirkzeit der thermischen Belastung möglichst kurz halten. Dies wird im Prozess hauptsächlich durch die Vorschubgeschwindigkeit des Prepregs und die Leistung des Strahlerfeldes gesteuert, was je nach Polymertyp bzw. spez. Wärmekapazität des Polymers, des eingestellten Matrixvolumenanteils und des eingesetzten Faserhalbzeugs individuell eingestellt werden muss. Es hat sich als vorteilhaft herausgestellt, die Einwirkzeit der thermischen Belastung kleiner oder gleich 5 min, bevorzugt kleiner oder gleich 3 min, besonders bevorzugt kleiner oder gleich 1 min einzustellen. Für einen PC-basierten Thermoplasten kombiniert mit einem Glasfaserhalbzeug mit einer Breite von 1m und einem Flächengewicht von 600 g/m$^2$ bei einem zu erzielenden Faservolumengehalt von 50 Vol%, kann dies beispielsweise dadurch realisiert werden, dass man ein 1 m$^2$ großes Strahlerfeld mit einer Nennleistung von min. 5,2 KW einsetzt, und die Vorschubgeschwindigkeit des Prepregs auf 0,03 m/s einstellt.

Nach dem Anschmelzen des Matrixmaterials auf dem Faserhalbzeug, kühlt der gesamte Verbund ab und kann als Mikropartikel-Prepreg aufgewickelt und später weiterverarbeitet werden.

Die Herstellung von Organoblechen auf Basis von Mikropartikel-Prepregs erfolgt analog dem Herstellverfahren auf Basis von Pulver-Prepregs. Für einen Fertigungsprozess auf einer kontinuierlichen oder semikontinuierlichen Presse werden die zuvor herstellten und aufgewickelten Mikropartikel-Prepregs definiert angeordnet und gleichzeitig in Heiz- bzw. Presszone mit konstantem Vorschub eingezogen. Im ersten Bereich der Presse werden die Prepreglagen unter konstantem Druck aufgeheizt.

Ähnlich wie bei der Herstellung der Mikropartikel-Prepregs, hängt die Menge der einzubringenden Wärmeleistung und die Dauer der Einwirkzeit stark vom eingesetzten Matrixmaterial, vom eingesetzten Fasermaterial und vor allem von der individuellen Schichtung und Anzahl der Mikropartikel-Prepregs ab. Nachfolgend sind beispielhaft Temperaturbereiche für verschiedene PC-basierte Thermoplaste genannt.

Für reines PC liegen diese Temperaturen im Bereich zwischen 270 und 320°C, bevorzugt zwischen 280 und 310°C, besonders bevorzugt zwischen 285 und 295°C.

Für PC-ABS Blends liegen diese Temperaturen im Bereich zwischen 240 und 300°C, bevorzugt zwischen 250 und 290°C, besonders bevorzugt zwischen 265 und 280°C.

Für PC-PET Blends liegen diese Temperaturen im Bereich zwischen 250 und 300°C, bevorzugt zwischen 260 und 290°C, besonders bevorzugt zwischen 270 und 285°C.

Für PC-PBT Blends liegen diese Temperaturen im Bereich zwischen 240 und 300°C, bevorzugt zwischen 255 und 290°C, besonders bevorzugt zwischen 270 und 280°C.

Die Einwirkzeit der dargestellten Temperaturbereiche muss so gewählt werden, dass einerseits eine gute Imprägnierung der Fasen gewährleistet ist, aber andererseits die Einwirkdauer nicht zu lange ist, sodass es zu einem Abbau des Matrixmaterials kommt. Es hat sich als vorteilhaft herausgestellt, wenn die Einwirkzeit für die dargestellten Thermoplaste in den genannten Temperaturbereichen zwischen 5 und 20min, bevorzugt zwischen 8 und 15min, besonders bevorzugt zwischen 10 und 13min beträgt.

Ganz allgemein kann die Thermoplastmatrix erfindungsgemäßer Verbundwerkstoffe aus den verschiedensten thermoplastischen Materialien bestehen. Wesentlich ist, dass der Thermoplast ein niedriges Erweichungsintervall bzw. einen niedrigeren Schmelzpunkt besitzt als das Material, aus dem die Verstärkungsfasern bestehen. In Frage kommen beispielsweise Thermoplaste im weitesten Sinne, d. h. Stoffe, die sich reversibel oder intermediär thermoplastisch verhalten, z. B. thermoplastische Kunststoffe und thermoplastische Phasen von Duromeren.

Im Sinne der Erfindung sind alle thermoplastisch verarbeitbaren Werkstoffe geeignet wie beispielsweise Polyolefine, insbesondere Polypropylen (PP) und Polyethylen (PE), Vinyl polymerisate wie beispielsweise Polyvinylhalogenide, Polyvinylester, Polyvinylether, Polyacrylate, Polymethacrylate, insbesondere Polymethylmethacrylat (PMMA), Polyamide, insbesondere Polyamid 6 und 66, sowie 12, thermoplastische Polyurethane, Polyharnstoffe, Polyimide, Polyester, insbesondere Polyethylenterephthalat (PET) und Polybutylentherphthalat (PBT), Polyether, Polystyrole, syndiotaktisches Polystyrol, Polyhydantoine, Polyphenylenoxide, Polyphenylensulfide, Polysulfone, Polycarbonate, insbesondere BPA - Polycarbonate, BPA /TMCBPA Co-Polycarbonate und Siloxan / BPA Copolycarbonate, Polyesterpolycarbonate, Acrylnitril-Butadien-Styrol (ABS), Acrylester-Styrol-Acrylnitril (ASA), Phenolharzvorläufer, Furanharzvorläufer, Melaminharzvorläufer, Epoxidharzvorläufer, Verbindungen mit polymerisations und/oder polyadditionsfähigen Doppelbindungen, Polyimidvorläufer, Polyetherketone, Polyethersulfone, Polyetherimide, Polyamidimide, Polyfluoralkene, Polyestercarbonate und Liquid-crystal-Polymere, sowie organische Celluloseester und ferner unpolare thermoplastische Polymere (z. B. Polyolefine), denen polare Gruppen aufgepropft wurden.

Eingesetzt werden können auch Mischungen aus den genannten thermoplastischen Werkstoffen bestehend aus zwei und mehreren Komponenten.

In einer bevorzugten Ausführungsform werden amorphe thermoplastische Kunststoffe insbesondere Polycarbonate, insbesondere BPA - Polycarbonat, BPA /TMC-BPA Co-Polycarbonate und Siloxan / BPA Copolycarbonate, Polyesterpolycarbonate sowie Mischungen aus diesen mit Polyester, insbesondere Polyethylenterephthalat (PET) und Polybutylentherphthalat (PBT) sowie Mischungen aus diesen mit Acrylnitril-Butadien-Styrol (ABS) und Acrylester-Styrol-Acrylnitril (ASA) eingesetzt.

Bei den parallel geordneten Verstärkungsfasern handelt es sich um endlose Verstärkungsfasern, die z.B. als Einzelfasern (Monofile), Rovings, Stränge, Garne, Zwirne oder Seile vorliegen können. Vorzugsweise weisen die einzelnen Filamente Durchmesser im Bereich von 0,5 bis 50 μm auf. Unter endlosen Verstärkungsfasern bzw. Filamenten werden solche verstanden, die im Allgemeinen eine Länge aufweisen, welche etwa der Länge des herzustellenden Linearprofils bzw. des Bandes entspricht.

Die Verstärkungsfasern können als Endlosfaser in Form von Geweben, Gelegen, Geflechten und als Langfaser in Form von Wirrfasermatten oder Vliesen vorliegen. Bevorzugt werden im Rahmen dieser Erfindung Gewebe, Gelege und Vliese eingesetzt.

Der chemische Aufbau der Verstärkungsfasern kann von der unterschiedlichsten Art sein. Wesentlich ist nur, dass die Verstärkungsfasern einen höheren Erweichungs- bzw. Schmelzpunkt besitzen, als die jeweils vorliegende Thermoplastmatrix. Beispiele für Fasermaterialien sind anorganische Materialien wie silikatische und nichtsilikatische Gläser der verschiedensten Art, Kohlenstoff, Basalt, Bor, Siliciumcarbid, Metalle, Metallegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Basalt, Liquid-crystal-Polymere, Polyphenylensulfide, Polyetherketone, Polyetheretherketone und Polyetherimide. Besonders bevorzugte Verstärkungsfasern sind Glasfasern und Kohlefasern.

## Abbildungsbezeichnungen

Abbildung 1 zeigt die schematische Darstellung einer Auslaufbox, mit deren Hilfe die Rieselfähigkeit von Pulvern und sphärischen Mikropartikeln gemessen wurde

Abbildung 2 zeigt die Randbedingungen für die mechanischen Biegetests

Abbildung 3 zeigt die Einteilung des Einheitskreises in gleichgroße Segmente und stellt den Konturwinkel dar, der zur Charakterisierung der Pulverteilchen und Mikropartikel eingesetzt wird

Abbildung 4 zeigt einen sphärischen Mikropartikel in vergrößerter Draufsicht (Sphärischer Mikropartikel #1)

Abbildung 5 zeigt zwei sphärische Mikropartikel in vergrößerter Draufsicht (Sphärische Mikropartikel #2, #3)

Abbildung 6 zeigt zwei sphärische Mikropartikel in vergrößerter Draufsicht (Sphärische Mikropartikel #4, #5)

Abbildung 7 zeigt zwei Pulverteilchen in vergrößerter Draufsicht (Pulverpartikel #1, #2)

Abbildung 8 zeigt ein Pulverteilchen in vergrößerter Draufsicht (Pulverpartikel #3)

Abbildung 9 zeigt zwei Pulverteilchen in vergrößerter Draufsicht (Pulverpartikel #4, #5)

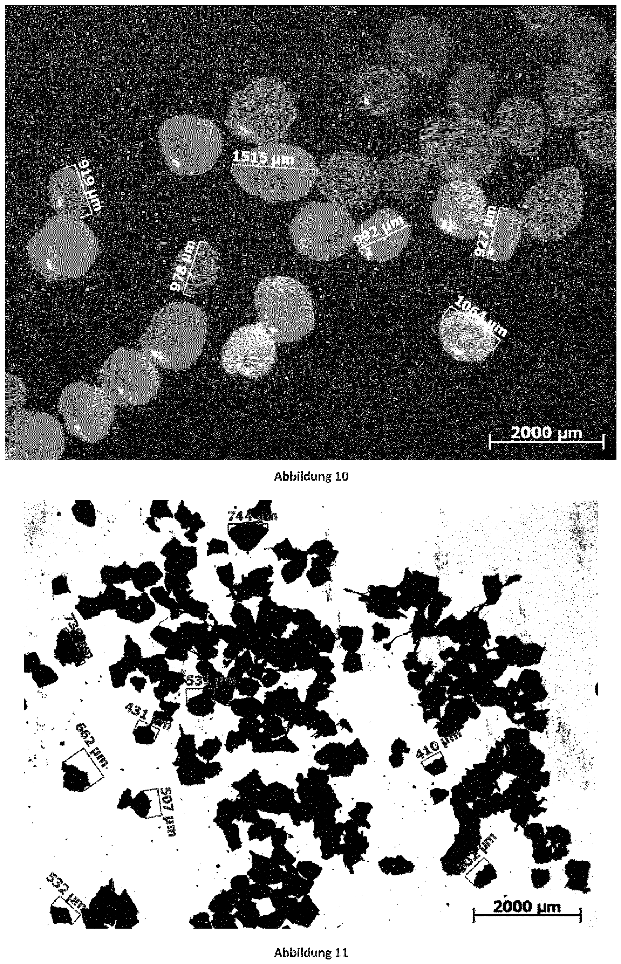

Abbildung 10 zeigt eine Schar an sphärischen Mikropartikeln in vergrößerter Draufsicht

Abbildung 11 zeigt eine Schar an Pulverteilchen in vergrößerter Draufsicht

## Beispiele

## Herstellung der Versuchsmuster (Prepregs und Organobleche)

Die in der vorliegenden Erfindung hergestellen Organobleche wurden mit Hilfe der Prepreg-Technologie produziert. Hierfür wurde zunächst aus Bayblend T65XF in handelsüblicher Granulatform Pulver und Mikropartikeln erzeugt.

## *Herstellung des Polymerpulvers*

Das Pulver aus Bayblend T65XF wurde mit Hilfe einer gegenläufigen Stiftmühle vom Typ Malvern Hydro 2000S hergestellt. Dabei wurde handelsübliches Bayblend T65 XF (PC/ABS-Blend, Vicat B120 = 120°C) heruntergekühlt und vermahlen. Die Drehzahlen von Gehäuse und Türrotor wurden auf 8500 U/min eingestellt. Gute Ergebnisse wurden mit einer Prozesseinstellung erreicht, bei denen die Materialtemperatur am Mühlenaustritt bei -25°C lag. Als Kühlmedium wurde flüssiger Stickstoff eingesetzt. Die gewonnenen Pulver wurden für die Weiterverarbeitung gesiebt und klassifiziert. Für die Herstellung der Prepregs wurde bevorzugt die Klassifizierung 100 - 400 μm eingesetzt.

**Herstellung der sphärischen Mikropartikel**

Die Mikropartikel aus Bayblend T65 XF wurden mit Hilfe einem Doppelwellenextruder mit einem Schneckendurchmesser von 25 mm hergestellt. Dabei wurde handelsübliches Bayblend T65 XF (PC/ABS-Blend, Vicat B120 = 120°C) mit einer Schmelzetemperatur von 280°C und einem Materialdurchsatz von 18kg/h re-extrudiert. Als Granuliersystem zur Herstellung der Mikropartikel wurde eine Unterwassergranulierung der Fa. Gala (Xanten/Deutschland) verwendet. Dabei wurde zur Formgebung der Mikropartikel am Schmelzeaustritt eine Düsenplatte mit 32 Bohrungen zu je 0,5 mm verwendet. Die Mikropartikel wurden direkt nach Düsenaustritt im Wasserkontakt bei 90°C solidifiziert und mit einem rotierenden Messer (7 Klingen) bei 4000 U/min abgeschnitten. Danach wurden die Mikropartikel in einem nachgeschalteten Zentrifugaltrockner getrocknet und abgefüllt.

***Herstellung der Prepregs und Organobleche:***

Als Gewebe für die Organobleche wurden Glasfasergewebe vom Typ Hexcel HexForce 1038 (Köper 2/2, 600 g/m$^2$) eingesetzt. Die Herstellung der Prepregs erfolgte wie im Stand der Technik beschrieben. Hierfür wurde die Pregpreganlage des Instituts für Verbundwerkstoffe (IVW) in Kaiserslautern eingesetzt. Die Temperaturzonen für die Herstellung der Prepregs wurden wie folgt eingestellt:

    o Heizzone 1 = 255°C

    o Heizzone 2 = 265°C

    o Heizzone 3 = 275°C

Für die Pregpregherstellung mit Polymerpulver und sphärischen Mikropartikeln wurden jeweils die gleichen Prozesseinstellungen verwendet. Für die Herstellung der Organobleche wurden jeweils vier Lagen Prepregs auf einer statischen Presse verpresst. Der eingestellt Anpressdruck betrug konstant 25bar. Die Presse wurde auf eine Verarbeitungstemperatur von 260°C aufgeheizt und ca. 15min gehalten. Anschließend wurde die Presse wieder auf Raumtemperatur abgekühlt. Schließlich wurden aus definierten Bereich in der Mitte der Organobleche Proben für Biegetests herausgeschnitten.

**Versuchsergebnisse**

***Rieseltests***

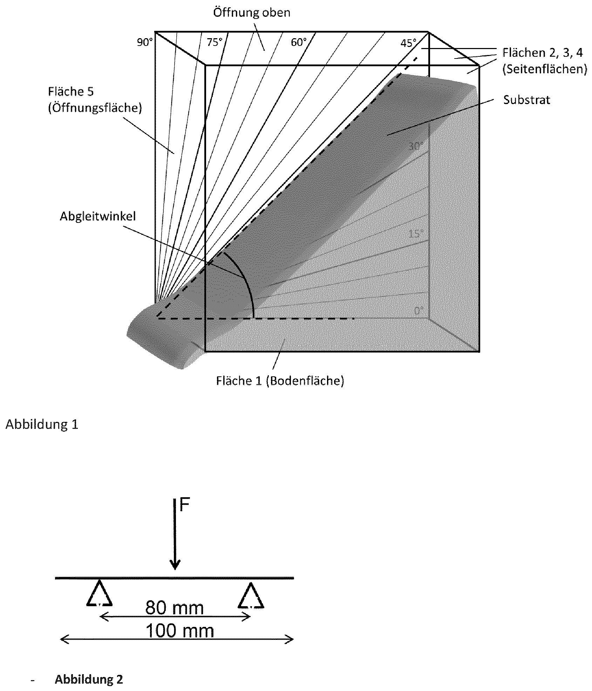

Um die unterschiedlichen Rieselfähigkeiten von Polymerpulver und sphärischen Mikropartikeln zu messen, wurde eine transparente Box (im folgenden auch Auslaufbox genannt) mit den Innenabmaßen 100mm x 100mm x 50mm konstruiert, wobei diese Box nach oben hin offen ist und eine Seite mit dem Abmaßen 100mm x 50mm geöffnet und geschlossen werden kann. Auf einer der 100mm x 100mm großen Seitenfläche ist eine Winkelskala für den Bereich 0° - 90° angebracht (siehe Abbildung 1).

Versuchsablauf und Auswertung:

Für den Versuch wird die Auslaufbox zunächst zu allen Seitenflächen hin geschlossen, sodass sie nur nach oben hin geöffnet ist. Durch diese offene Seite wird die Auslaufbox bis über die oberen Kanten der Seitenflächen mit Substrat (Pulver bzw. Mikropartikeln) befüllt. Das überstehende Substrat wird anschließend abgestreift, sodass die Befüllung bündig mit den Oberkanten der Seitenflächen endet.
Dann wird die eine Seitenfläche (Fläche 5, Abbildung 1) geöffnet, sodass das Substrat aus der Auslaufbox rieselt. Dieses rausgerieselte Substrat wird zunächst in einem Auffangbehältnis gesammelt. Je nach Beschaffenheit des Substrats bilden sich unterschiedliche Abgleitwinkel (Siehe Abbildung 1) aus, die mit Hilfe der angebrachten Skala abgelesen werden können. Die abgelesenen Werte sind in Tabelle 1 mit "Abgleitwinkel" bezeichnet. Anschließend wird das in der Auslaufbox verbliebene Substrat in ein zweites Auffangbehältnis geschüttet und gewogen. Diese Werte sind in Tabelle 1 mit "Restmasse" bezeichnet. Zuletzt wird das Substrat aus dem ersten Auffangbehältnis dazugegeben und ebenfalls gewogen. Diese Werte sind in Tabelle 1 mit "Gesamtmasse" bezeichnet.
Dieser Versuch wird je Substrat dreimal durchgeführt.

**Tabelle 1**

| Versuchsmatrix | Messgrößen | Sphärische Mikropartikel | Pulver (> 400μm) | Pulver (100μm - 400μm) |
|---|---|---|---|---|
| Versuch 1 | Gesamtmasse | 336,80 g | 234,00 g | 216,50 g |
| | Abgleitwinkel | 31,00° | 51,00° | 73,00° |
| | Restmasse | 99,46 g | 130,00 g | 180,00 g |
| | Restanteil | 29,53% | 55,56% | 83,14% |
| Versuch 2 | Gesamtmasse | 339,70 g | 229,60 g | 215,10 g |
| | Abgleitwinkel | 31,00° | 44,00° | 73,00° |
| | Restmasse | 98,74 g | 109,10 g | 172,00 g |
| | Restanteil | 29,07% | 47,52% | 79,96% |
| Versuch 3 | Gesamtmasse | 342,20 g | 238,80 g | 218,20 g |
| | Abgleitwinkel | 31,00° | 67,00° | 70,00° |
| | Restmasse | 101,98 g | 158,50 g | 153,50 g |
| | Restanteil | 29,80% | 66,37% | 70,35% |
| Mittelwerte | Gesamtmasse | 339,57 g | 234,13 g | 216,60 g |
| | Abgleitwinkel | 31,00° | 54,00° | 72,00° |
| | Restmasse | 100,06 g | 132,53 g | 168,50 g |
| | Restanteil | 29,47% | 56,48% | 77,82% |

***Durchführung der Biegetests***

Die Biegetests wurden in Anlehnung an DIN EN ISO 14125 durchgeführt. Hierzu wurden aus den Organoblechen Proben mit den Randmaßen 15mm x 100mm hergestellt. Der Abstand zwischen den Auflagerstellen betrug 80mm (siehe Abbildung 2). Die Prüfungen wurden auf einer Zugprüfmaschine der Fa. Zwick als quasi-statische Biegetests mit einer Prüfgeschwindigkeit von 2mm/min durchgeführt. Aus den Ergebnissen der einzelnen Versuche wurde anschließend die arithmetischen Mittelwerte je Material gebildet (Siehe Tabelle 2 und Tabelle 3). Legende: $E_f$ Biegemodul, $\sigma_{fm}$ Biegefestigkeit, $\varepsilon_M$ Dehnung bei Biegefestigkeit, $\sigma_{fB}$ Biegespannung beim Bruch, $\varepsilon_B$ Bruchdehnung.

**Ergebnisse:** T65 XF (Sphärische Mikropartikel) **Erfindungsgemäß**

**Tabelle 2**

| | $E_f$ | $\sigma_{fm}$ | $\varepsilon_M$ | $\sigma_{fB}$ | $\varepsilon_B$ | Dicke $a_0$ | Dicke $b_0$ |
|---|---|---|---|---|---|---|---|
| Versuchsnr. | MPa | MPa | % | MPa | % | mm | mm |
| | | | | | | | |
| 1 | 22797,18 | 272,37 | 2,36 | 200,07 | 3,47 | 1,73 | 15,39 |
| 2 | 23491,86 | 272,94 | 2,09 | 189,46 | 3,22 | 1,72 | 15,32 |
| 3 | 22824,93 | 275,9 | 2,11 | 184,37 | 3,29 | 1,72 | 15,04 |
| 4 | 21787,97 | 260,89 | 2,25 | 162,51 | 4,03 | 1,77 | 15,37 |
| 5 | 22473,14 | 262,08 | 2,23 | 162,47 | 3,14 | 1,73 | 15,2 |
| | | | | | | | |
| | | | | | | | |

(fortgesetzt)

| | $E_f$ | $\sigma_{fm}$ | $\varepsilon_M$ | $\sigma_{fB}$ | $\varepsilon_B$ | Dicke $a_0$ | Dicke $b_0$ |
|---|---|---|---|---|---|---|---|
| Serie n=5 | MPa | MPa | % | MPa | % | mm | mm |
| | | | | | | | |
| x quer | 22675,02 | 268,84 | 2,21 | 179,78 | 3,43 | 1,734 | 15,26 |
| s | 618,92 | 6,86 | 0,11 | 16,77 | 0,36 | 0,02074 | 0,1454 |
| ν | 2,73 | 2,55 | 4,92 | 9,33 | 10,45 | 1,2 | 0,95 |

**Ergebnisse:** T65 XF (Pulver) **Nicht-erfindungsgemäß**

**Tabelle 3**

| | $E_f$ | $\sigma_{fm}$ | $\varepsilon_M$ | $\sigma_{fB}$ | $\varepsilon_B$ | Dicke $a_0$ | Dicke $b_0$ |
|---|---|---|---|---|---|---|---|
| Versuchsnr. | MPa | MPa | % | MPa | % | mm | mm |
| | | | | | | | |
| 1 | 23859,66 | 248,9 | 1,45 | 154,65 | 3,28 | 2,12 | 15,66 |
| 2 | 24008,52 | 245,38 | 1,43 | 159,92 | 3,33 | 2,12 | 15,73 |
| 3 | 22627,82 | 242,08 | 1,58 | 145,25 | 4,54 | 2,15 | 15,43 |
| 4 | 22860,69 | 229,76 | 1,44 | 137,85 | 3,24 | 2,15 | 15,68 |
| 5 | 23694,66 | 246,07 | 1,45 | 147,61 | 3,24 | 2,11 | 15,74 |
| 6 | 23216,81 | 240,02 | 1,41 | 148,98 | 3,4 | 2,13 | 15,48 |
| | | | | | | | |
| | $E_f$ | $\sigma_{fm}$ | $\varepsilon_M$ | $\sigma_{fB}$ | $\varepsilon_B$ | Dicke $a_0$ | Dicke $b_0$ |
| Serie n=6 | MPa | MPa | % | MPa | % | mm | mm |
| | | | | | | | |
| x quer | 23378,03 | 242,03 | 1,46 | 149,04 | 3,51 | 2,13 | 15,62 |
| s | 563,24 | 6,77 | 0,06 | 7,63 | 0,51 | 0,01673 | 0,1322 |
| ν | 2,41 | 2,8 | 4,08 | 5,12 | 14,58 | 0,79 | 0,85 |

**Charakterisierung von sphärischen Mikropartikeln:**

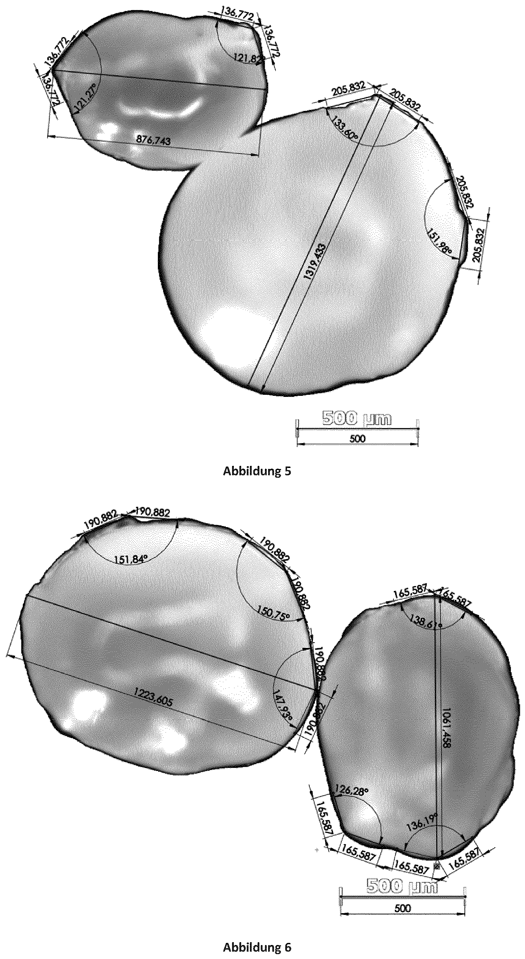

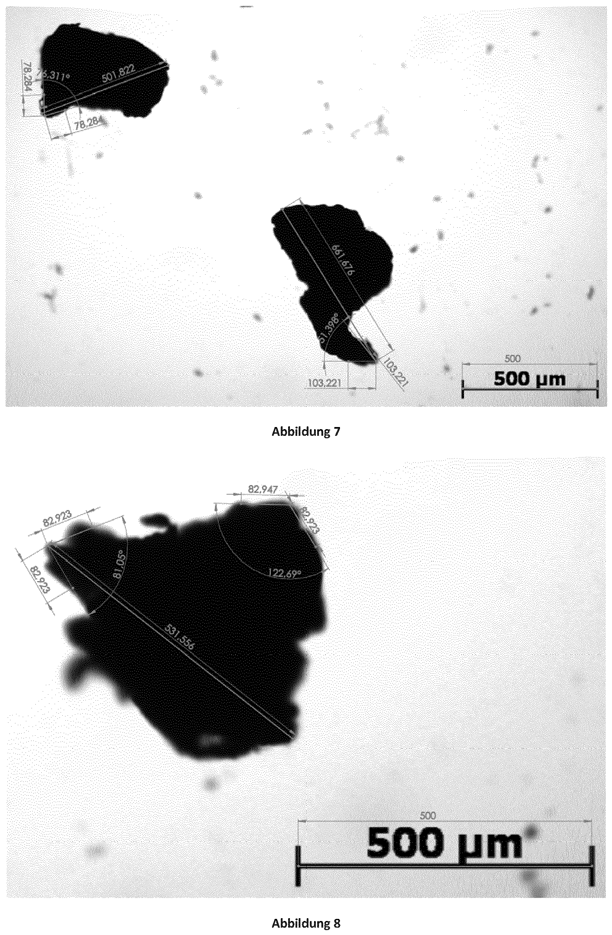

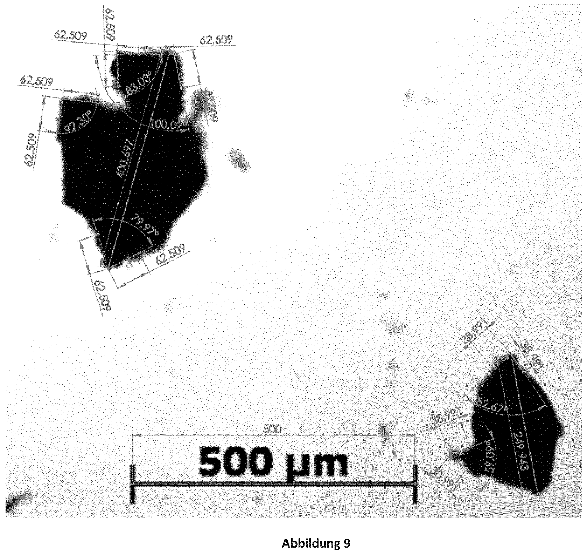

Für die Charakterisierung der Mikropartikel und Pulverteilchen wurden Mikroskopieaufnahmen in 50facher Vergrößerung mit einem Mikroskop vom Typ Axioplan (Fa. Zeiss) erstellt. Mittels visueller Auswertung wird zunächst die größte Ausdehnunge der Teilchen erfasst und mithilfe einer Grafiksoftware (Zeiss Axiovision) und CAD-Software (Solidworks 2012) quantifiziert. Nun werden entlang der Teilchenkontur Bereiche gesucht, in denen die Kontur eine starke Unstetigkeit bzw. Krümmung aufweist. Diese Bereiche werden jeweils durch zwei Sehnen approximiert, sodass der Schnittpunkt der beiden Sehnen möglichst im Punkt mit der größten Krümmung liegt. Anschließend wird der innenliegende Winkel gemessen, der durch die beiden Sehnen gebildet wird. Im Folgenden wird dieser Winkel als Konturwinkel bezeichnet. Sind alle Bereiche, in denen eine starke Unstetigkeit der Teilchenkontur vorliegt approximiert, wird als Ergebnis der Vermessung der Bereich mit dem kleinsten Konturwinkel gewertet. Beispiele von vermessenen Teilchen sind in den Abbildungen Abbildung 4 bis Abbildung 9 dargestellt. Die Ergebnisse aller Messungen sind in Tabelle 4 zusammengefasst.

**Ergebnisse Partikelvermessung**

Tabelle 4

|  | Konturwinkel | Kleinster Konturwinkel |
|---|---|---|
| Sphärischer Mikropartikel #1 | 134,17° | **134,17°** |
|  | 151,43° |  |
|  |  |  |
|  |  |  |
| Sphärischer Mikropartikel #2 | 121,82° | **121,27°** |
|  | 121,27° |  |
|  |  |  |
|  |  |  |
| Sphärischer Mikropartikel #3 | 133,60° | **133,60°** |
|  | 151,98° |  |
|  |  |  |
|  |  |  |
| Sphärischer Mikropartikel #4 | 151,84° | **147,93°** |
|  | 150,75° |  |
|  | 147,93° |  |
|  |  |  |
| Sphärischer Mikropartikel #5 | 138,61° | **126,28°** |
|  | 136,19° |  |
|  | 126,28° |  |
|  |  |  |
| Pulverpartikel #1 | 76,31° | **76,31°** |
|  |  |  |
|  |  |  |
|  |  |  |
| Pulverpartikel #2 | 51,40° | **51,40°** |
|  |  |  |
|  |  |  |
|  |  |  |
| Pulverpartikel #3 | 81,05° | **81,05°** |
|  | 122,69° |  |
|  |  |  |
|  |  |  |

(fortgesetzt)

| | Konturwinkel | Kleinster Konturwinkel |
|---|---|---|
| Pulverpartikel #4 | 92,30° | **79,97°** |
| | 83,03° | |
| | 100,07° | |
| | 79,97° | |
| Pulverpartikel #5 | 82,67° | **59,09°** |
| | 59,09° | |
| | | |
| | | |

**Patentansprüche**

1. Verfahren zur Herstellung von Mikropartikel-Prepregs enthaltend wenigstens folgende Schritte:

   - Mikropartikel auf ein Fasergewebe, -gelege, -vlies oder Ähnliches auftragen,
   - durch Wärmezufuhr aufschmelzen,

   **dadurch gekennzeichnet, dass** thermoplastische Mikropartikel verwendet werden, von denen mindestens 80% einen Konturwinkel von > 90° aufweisen, wobei der Konturwinkel dadurch bestimmt wird, dass zunächst die größte Ausdehnung der Mikropartikel erfasst und quantifiziert wird, dann entlang der Teilchenkontur Bereiche gesucht werden, in denen die Kontur eine starke Unstetigkeit bzw. Krümmung aufweist, diese Bereiche jeweils durch zwei Sehnen approximiert werden, sodass der Schnittpunkt der beiden Sehnen möglichst im Punkt mit der größten Krümmung liegt und anschließend der innenliegende Winkel gemessen wird, der durch die beiden Sehnen gebildet wird, wobei dieser innenliegende Winkel der Konturwinkel ist, und wobei mindestens 80% der Partikel einen maximalen Durchmesser kleiner oder gleich 2000μm haben und mindestens 80% der Partikel einen maximalen Durchmesser größer oder gleich 400μm haben.

2. Verfahren gemäß Anspruch 1, **dadurch gekennzeichnet, dass** mindestens 90% der Partikel einen Konturwinkel von > 90°, aufweisen.

3. Verfahren gemäß Anspruch 1, **dadurch gekennzeichnet, dass** mindestens 95% der Partikel einen Konturwinkel von > 90°, aufweisen.

4. Verfahren gemäß einem der Ansprüche 1 bis 3, **dadurch gekennzeichnet, dass** der Kontourwinkel der Partikel > 105° aufweist.

5. Verfahren gemäß einem der Ansprüche 1 bis 3, **dadurch gekennzeichnet, dass** der Kontourwinkel der Partikel > 120° aufweist.

6. Verfahren gemäß einem der Ansprüche 1 bis 5, **dadurch gekennzeichnet, dass** mindestens 80% der Partikel einen maximalen Durchmesser kleiner oder gleich 1700μm hat.

7. Verfahren gemäß einem der Ansprüche 1 bis 5, **dadurch gekennzeichnet, dass** mindestens 80% der Partikel einen maximalen Durchmesser kleiner oder gleich 1300μm hat.

8. Verfahren zur Herstellung eines mit Verstärkungsfasern versehenen thermoplastischen Verbundwerkstoffes, **dadurch gekennzeichnet, dass** wenigstens folgende Schritte verrichtet werden:

   ▪ Herstellung der thermoplastischen Mikropartikel, wobei mindestens 80% der Partikel einen Konturwinkel von > 90° aufweisen und mindestens 80% der Partikel einen maximalen Durchmesser kleiner oder gleich 2000μm haben und mindestens 80% der Partikel einen maximalen Durchmesser größer oder gleich 400μm

haben,

■ Herstellung des Mikropartikel-Prepregs gemäß einem der Ansprüche 1 bis 7 Verpressen des Mikropartikel-Prepregs zu einem Verbundwerkstoff, wobei der Konturwinkel der Mikropartikel dadurch bestimmt wird, dass zunächst die größte Ausdehnung der Mikropartikel erfasst und quantifiziert wird, dann entlang der Teilchenkontur Bereiche gesucht werden, in denen die Kontur eine starke Unstetigkeit bzw. Krümmung aufweist, diese Bereiche jeweils durch zwei Sehnen approximiert werden, sodass der Schnittpunkt der beiden Sehnen möglichst im Punkt mit der größten Krümmung liegt und anschließend der innenliegende Winkel gemessen wird, der durch die beiden Sehnen gebildet wird, wobei dieser innenliegende Winkel der Konturwinkel ist.

**Claims**

1. Process for producing microparticle prepregs comprising at least the following steps:

   - application of microparticles to a woven fibre fabric, laid fibre scrim, fibre non-woven or the like,
   - melting by introducing heat,

   **characterized in that** thermoplastic microparticles are used and at least 80% of these have a contour angle of > 90°, where the contour angle is determined **in that** firstly the largest dimension of the microparticles is recorded and quantified, then regions along the outline of the particles are sought in which the outline exhibits a marked discontinuity or marked curvature, these regions are in each case approximated by two chords in such a way that the point of intersection of the two chords is as close as possible to the point with the largest curvature, and then the internal angle formed by the two chords is measured, where this internal angle is the contour angle, and where at least 80% of the particles have a maximum diameter smaller than or equal to 2000 $\mu$m and at least 80% of the particles have a maximum diameter greater than or equal to 400 $\mu$m.

2. Process according to Claim 1, **characterized in that** at least 90% of the particles have a contour angle of > 90°.

3. Process according to Claim 1, **characterized in that** at least 95% of the particles have a contour angle of > 90°.

4. Process according to any of Claims 1 to 3, **characterized in that** the contour angle of the particles is > 105°.

5. Process according to any of Claims 1 to 3, **characterized in that** the contour angle of the particles is > 120°.

6. Process according to any of Claims 1 to 5, **characterized in that** at least 80% of the particles have a maximum diameter smaller than or equal to 1700 $\mu$m.

7. Process according to any of Claims 1 to 5, **characterized in that** at least 80% of the particles have a maximum diameter smaller than or equal to 1300 $\mu$m.

8. Process for producing a thermoplastic composite material provided with reinforcing fibres, **characterized in that** at least the following steps are performed:

   ■ Production of the thermoplastic microparticles, where at least 80% of the particles have a contour angle of >90° and at least 80% of the particles have a maximum diameter smaller than or equal to 2000 $\mu$m and at least 80% of the particles have a maximum diameter greater than or equal to 400 $\mu$m,
   ■ Production of the microparticle prepreg according to any of Claims 1 to 7,

   Pressing of the microparticle prepreg to give a composite material, where the contour angle of the microparticles is determined **in that** firstly the largest dimension of the microparticles is recorded and quantified, then regions along the outline of the particles are sought in which the outline exhibits a marked discontinuity or marked curvature, these regions are in each case approximated by two chords in such a way that the point of intersection of the two chords is as close as possible to the point with the largest curvature, and then the internal angle formed by the two chords is measured, where this internal angle is the contour angle.

**Revendications**

1. Procédé de fabrication de pré-imprégnés de microparticules comprenant au moins les étapes suivantes :

   - des microparticules sont appliquées sur un tissu, une nappe, un non-tissé de fibres ou analogue,
   - fondues par apport de chaleur,

   **caractérisé en ce que** des microparticules thermoplastiques dont au moins 80 % présentent un angle de contour > 90° sont utilisées, l'angle de contour étant déterminé tout d'abord en déterminant et quantifiant la plus grande dimension des microparticules, puis en cherchant le long du contour des particules des zones dans lesquelles le contour présente une discontinuité ou courbure importante, en approximant chacune de ces zones par deux cordes d'un cercle, de telle sorte que l'intersection des deux cordes d'un cercle se situe autant que possible à l'emplacement ayant la courbure la plus importante, puis en mesurant l'angle intérieur formé par les deux cordes d'un cercle, cet angle intérieur étant l'angle de contour, et au moins 80 % des particules ayant un diamètre maximal inférieur ou égal à 2 000 $\mu$m et au moins 80 % des particules ayant un diamètre maximal supérieur ou égal à 400 $\mu$m.

2. Procédé selon la revendication 1, **caractérisé en ce qu'**au moins 90 % des particules présentent un angle de contour > 90°.

3. Procédé selon la revendication 1, **caractérisé en ce qu'**au moins 95 % des particules présentent un angle de contour > 90°.

4. Procédé selon l'une quelconque des revendications 1 à 3, **caractérisé en ce que** l'angle de contour des particules est > 105°.

5. Procédé selon l'une quelconque des revendications 1 à 3, **caractérisé en ce que** l'angle de contour des particules est > 120°.

6. Procédé selon l'une quelconque des revendications 1 à 5, **caractérisé en ce qu'**au moins 80 % des particules ont un diamètre maximal inférieur ou égal à 1 700 $\mu$m.

7. Procédé selon l'une quelconque des revendications 1 à 5, **caractérisé en ce qu'**au moins 80 % des particules ont un diamètre maximal inférieur ou égal à 1 300 $\mu$m.

8. Procédé de fabrication d'un matériau composite thermoplastique muni de fibres renforçantes, **caractérisé en ce qu'**au moins les étapes suivantes sont réalisées :

   - la fabrication des microparticules thermoplastiques, au moins 80 % des particules présentant un angle de contour > 90° et au moins 80 % des particules ayant un diamètre maximal inférieur ou égal à 2 000 $\mu$m, et au moins 80 % des particules ayant un diamètre maximal supérieur ou égal à 400 $\mu$m,
   - la fabrication du pré-imprégné de microparticules selon l'une quelconque des revendications 1 à 7,
   - la compression du pré-imprégné de microparticules en un matériau composite, l'angle de contour des microparticules étant déterminé tout d'abord en déterminant et quantifiant la plus grande dimension des microparticules, puis en cherchant le long du contour des particules des zones dans lesquelles le contour présente une discontinuité ou courbure importante, en approximant chacune de ces zones par deux cordes d'un cercle, de telle sorte que l'intersection des deux cordes d'un cercle se situe autant que possible à l'emplacement ayant la courbure la plus importante, puis en mesurant l'angle intérieur formé par les deux cordes d'un cercle, cet angle intérieur étant l'angle de contour.

EP 2 897 775 B1

Öffnung oben

90° | 75° | 60° | 45°

Flächen 2, 3, 4 (Seitenflächen)

Fläche 5 (Öffnungsfläche)

Substrat

Abgleitwinkel

30°

15°

0°

Fläche 1 (Bodenfläche)

Abbildung 1

F

80 mm

100 mm

- Abbildung 2

15

- Abbildung 3

Abbildung 4

**Abbildung 5**

**Abbildung 6**

Abbildung 7

Abbildung 8

Abbildung 9

Abbildung 10

Abbildung 11

**IN DER BESCHREIBUNG AUFGEFÜHRTE DOKUMENTE**

**In der Beschreibung aufgeführte Patentdokumente**

- EP 56703 B1
- JP 2008302595 A
- US 20090155522 A1
- US 20060137799 A1
- EP 1770115 A

- US 2003538357 A1
- DE 69107203 T2
- US 19864626306 A
- WO 02068356 A
- EP 0885704 B1